# EUROPEAN PATENT APPLICATION

(11) **EP 1 712 174 A2**
(43) Date of publication of application: **18.10.2006**
(21) Application number: 05356143.7
(22) Date of filing: 30.08.2005
(51) Int. Cl.: A47L 9/04

(54) **Turbine brush of vacuum cleaner**

(30) Priority: 15.04.2005 KR 2005031517
(71) Applicant: Samsung Gwangju Electronics Co., Ltd., Gwangju-city (KR)
(72) Inventor: Oh, Jang-keun, Seo-gu, Gwangju-city (KR); Park, Jin-soo, Seongbuk-gu, Seoul (KR)
(74) Representative: Myon, Gérard Jean-Pierre

(57) **Abstract**

A turbine brush (200) of a vacuum cleaner comprises a turbine brush body (210) having a suction path (212) formed therein for allowing air drawn in by a suction force generated in a cleaner body to pass therethrough. A cleaning member (220) is disposed on the turbine brush to face a cleaning surface, for removing dirt particles from the cleaning surface. A turbine unit (230) is rotatably disposed in the suction path (212) to provide a driving force to drive the cleaning member and has at least one blade (234). The blade (234) has a smaller width (D) than the suction path (212) with respect to the direction of a rotary shaft (233). Accordingly, the turbine unit (230) rotating the cleaning member does not impede the suction path and, simultaneously, a rotational force is accelerated.

## Description

### BACKGROUND OF THE INVENTION

### Field of the Invention

The present invention relates to a vacuum cleaner, and more particularly, to a turbine brush of a vacuum cleaner which is rotated by a turbine to sweep dirt particles from a cleaning surface.

### Description of the Related Art

General vacuum cleaners have a cleaning member in contact with a cleaning surface to remove dirt particles from the cleaning surface. The cleaning member cleans the cleaning surface using a rotational force or a reciprocal movement while moving along the cleaning surface. As a cleaning member, a general bristle brush or a dust cloth is typically employed.

The cleaning member is supplied with a rotational force from an extra driving motor or a turbine. The driving motor is connected with the cleaning member and selectively provides the rotational force to the cleaning member. In this case, in order to connect the driving motor with the cleaning member, a structure becomes inevitably complicated and a manufacturing cost increases. Therefore, a method of using a rotational force of the turbine is mainly used to rotate the cleaning member.

The turbine is disposed in a suction path through which air-borne dirt particles are drawn into by a suction force generated at a cleaner body. The turbine is rotated by the air drawn in through the suction path. The rotational force is transmitted from the turbine to the cleaning member through a power transmitting means to drive the cleaning member.

However, as the turbine occupies an area of the suction path, the suction path becomes narrowed. Consequently, the dirt particles drawn in from the cleaning surface do not normally pass through the narrowed suction path and thus they are very likely to clog the turbine, which causes the rotational movement of the turbine to decelerate. Also, the collision of the dirt clogging the turbine with the drawn-in air causes a noise.

This problem results in deterioration of a driving force exerted to the cleaning member connected to the turbine, and thus, a cleaning operation cannot be smoothly performed by the cleaning member.

### SUMMARY OF THE INVENTION

The present invention has been developed in order to solve the above problems in the related art. Accordingly, an aspect of the present invention is to provide a turbine brush of a vacuum cleaner having an improved structure in which a turbine does not interfere with a suction path and also is capable of improving a rotational force to rotate a cleaning member.

The above aspect is achieved by providing a turbine brush of a vacuum cleaner comprising a turbine brush body having a suction path formed therein for allowing air drawn in by a suction force generated in a cleaner body to pass therethrough; a cleaning member disposed on the turbine brush to face a cleaning surface, for removing dirt particles from the cleaning surface, and a turbine unit rotatably disposed in the suction path to provide a driving force to drive the cleaning member, and having at least one blade, wherein the blade has a smaller width than the suction path with respect to the direction of the rotary shaft.

The turbine unit may comprise a plurality of turbines which are disposed along the rotary shaft away from each other.

The plurality of turbines may be coupled to each other and rotated together with each other, or may be connected to each other such that the turbines are independently rotated.

The plurality of turbines may be substantially symmetrical to each other, and the plurality of turbines may be provided as a pair of turbines.

The turbine unit may comprise a plurality of blades having the same width.

The turbine unit may comprise an inertia member for applying an inertia to a driving force of the turbine, and an end of at least one blade may be smaller than the rest portion of the blade.

The end of the blade may be curved.

The inertia member may be a mass that has an annulus shape and is supported by a side of the turbine unit to rotate together with the turbine unit.

The blade may have an uneven thickness in a rotation radius direction.

The blade may have a surface which is not subjected to an air resistance, the surface having an uneven arc.

An end of the blade may be thicker than the rest portion of the blade.

### BRIEF DESCRIPTION OF THE DRAWINGS

The above aspects and other advantages become apparent by describing an embodiment of the present invention in greater detail with reference to the accompanying drawings.

FIG. 1 is a perspective view showing a vacuum cleaner employing a turbine brush according to an embodiment of the present invention;

FIG. 2 is an bottom view showing the turbine brush of FIG. 1;

FIG. 3 is an exploded perspective view showing a turbine of FIG. 2;

FIG. 4 is a perspective view showing the turbine of FIG. 3 in an assembled state;

FIG. 5 is a cross section view taken along line I-I of FIG. 4;

FIG. 6 is an exploded perspective view showing a turbine according another embodiment of the present invention; and

FIG. 7 is a cross section view taken along line II-II of FIG. 6.

### DETAILED DESCRIPTION OF EXEMPLARY EMBODIMENTS

Hereinafter, a turbine brush of a vacuum cleaner according to an embodiment of the present invention will now be described in greater detail with reference to the accompanying drawings.

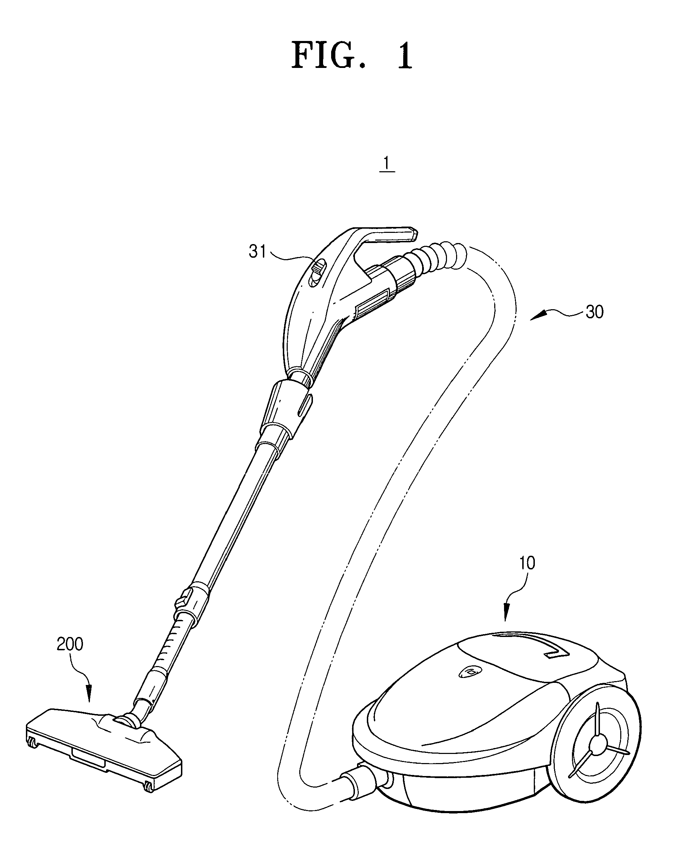

FIG. 1 is a perspective view showing a vacuum cleaner employing a turbine brush according to an embodiment of the present invention.

Referring to FIG. 1, a vacuum cleaner 1 comprises a cleaner body 10, a turbine brush 200, and a connection pipe 30.

The cleaner body 10 comprises a suction force generator (not shown) such as a driving motor to generate a suction force and a dust-collecting chamber (not shown) for collecting dirt particles centrifugally separated from drawn-in air by the suction force. Also, the connection pipe 30 connects the cleaner body 10 and the turbine brush 200 and is provided with a manipulation switch 31 for switching on/off the vacuum cleaner 1.

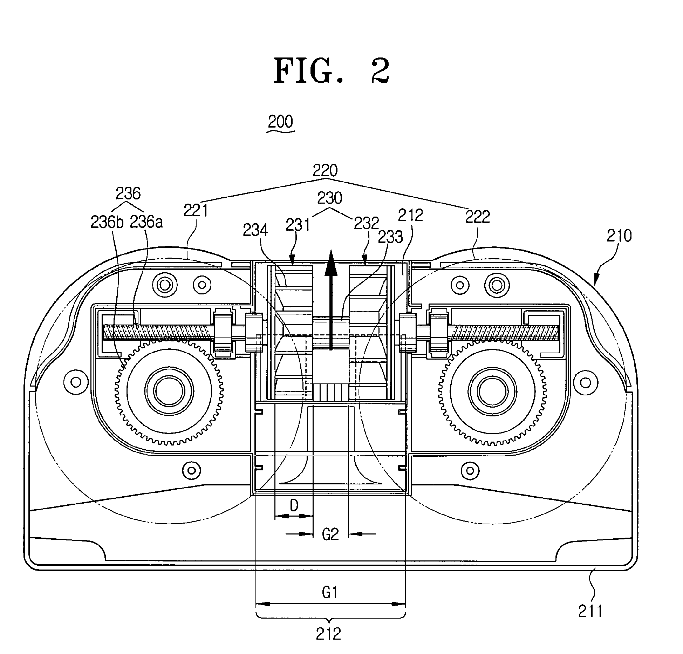

As shown in FIG. 2, the turbine brush 200 comprises a turbine brush body 210, a cleaning member 220, and a turbine unit 230.

The turbine brush body 210 is connected with the cleaner body 10 through the connection pipe 30 and is supplied with a suction force from the suction force generator (not shown). The turbine brush body 210 comprises an upper frame (not shown) and a lower frame 211 connected with the upper frame to form an exterior contour of the turbine brush body. The lower frame 211 faces a cleaning surface and has a suction port (not shown) through which the air is drawn in by the suction force. The suction port (not shown) is formed by opening one side of the lower frame 211. More preferably, the suction port may be formed in a position such that the suction port corresponds to the location of the cleaning member 220.

The turbine brush body 210 has a suction path 212 formed therein. The suction path 212 fluidly communicates with the connection pipe 30 to guide the air-borne dirt particles drawn in from the cleaning surface generated by the suction force by the suction force generator (not shown). For this, the suction path 212 is formed in a manner so that the drawn-in dirt particles pass the cleaning member 220, the turbine 230, and the connection pipe 30, consecutively and then, flow into the dust-collecting chamber (not shown) of the cleaner body 10.

The cleaning member 220 is disposed in the turbine brush body 210 to face the cleaning surface. The cleaning member 220 is exposed to the outside through the suction port (not shown) and contacts the cleaning surface.

The cleaning member 220 may employ a bristle brush having bristles at a predetermined interval. The bristle brush removes dirt particles from a cleaning surface by scratching or hitting the cleaning surface. The cleaning member 220 may employ a cloth brush to remove dirt particles from a cleaning surface by scrubbing the cleaning surface with a wet cloth. In this embodiment, the cleaning member 220 includes a first and a second cloth brushes 221 and 222. Since the structure of the cleaning member 220 is well-known in the related art, its detailed description will be omitted.

The turbine unit 230 is rotatably disposed on the suction path 212 to drive the cleaning member 220. The turbine unit 230 comprises a first turbine 231 and a second turbine 232 which rotate about a rotary shaft 233 away from each other.

The first and the second turbines 231 and 232 are distanced from each other by a predetermined gap G2. Accordingly, the suction path 212 is opened as much as the gap G2. For example, if the suction path 212 has a width G1 of approximately 10cm, the gap G2 between the first and the second turbines 231 and 232 is approximately 9~30mm.

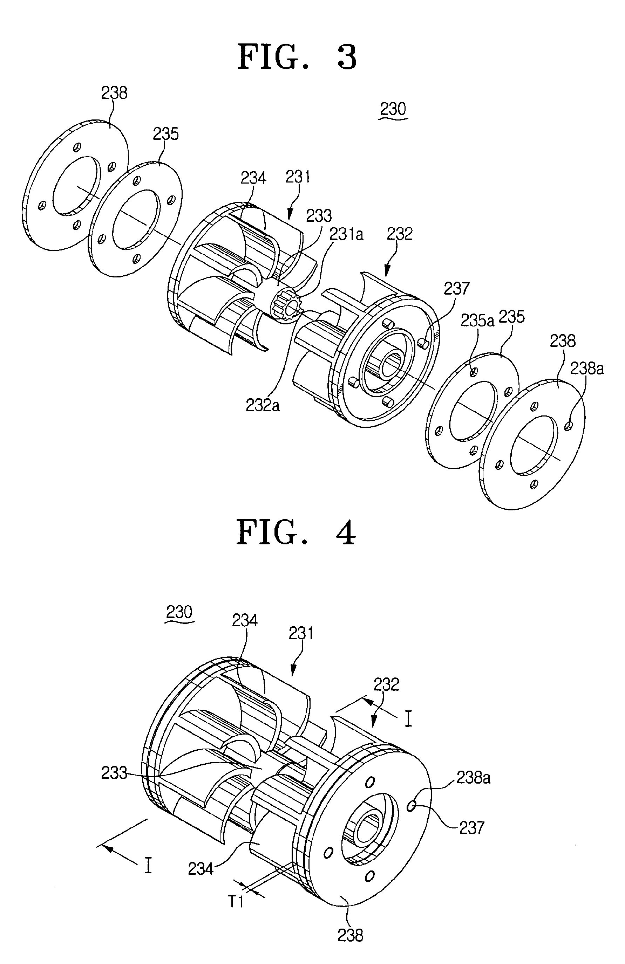

As shown in FIG. 3, the first and the second turbines 231 and 232 have a first coupler 231 a and a second coupler 232a which are coupled to each other. The first and the second couplers 231 a and 232a are coupled to each other such that the first and the second turbines 231 and 232 rotate together with each other. Preferably, the first and the second turbines 231 and 232 are substantially symmetrical with each other with respect to a coupling position between the first and second coupler 231a and 232a. The first and the second turbines 231 and 232 are coupled with each other such that the rotary shaft 233 is formed.

Although in this embodiment the first and the second turbines 231 and 232 rotate on the coincident rotary shaft 233, this should not be considered as limiting. In another embodiment, the first and the second turbines 231 and 232 may rotate independently.

As shown in FIGS. 3 to 5, the first and the second turbines 231 and 232 each comprise a plurality of blades 234, an inertia member 235 and a driving force transmitting unit 236.

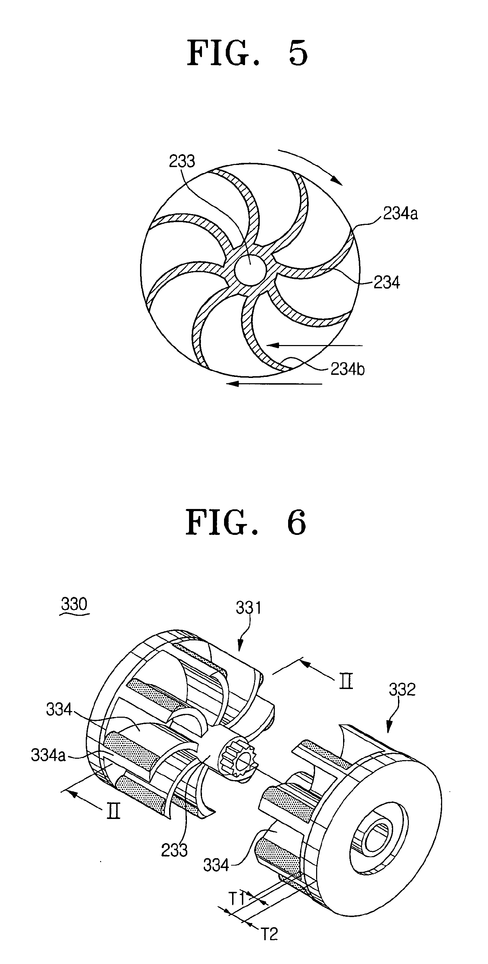

Each blade 234 has a width D smaller than the width G1 of the suction path 212 so as not to interfere with the suction path 212. In here, a value resulted by adding widths of the two blades (DX2) is smaller than G 1. An end 234a of each blade 234 is smaller in thickness than the rest portion of the blade 234 and is curved as shown in FIG. 5.

The end 234a of the blade 234 is shaped in an aeroplane wing that produces a lift force, which is typically exerted to an object in fluid in a vertical direction as air passes by the object. Accordingly, the plurality of blades 234 produces the lift force, and thereby accelerates a rotational force,

The blades 234 of the first and the second turbines 231 and 232 are rotated as the air, which is drawn in by the suction force generated by the suction force generator (not shown), passes by one surface 234b of each blade 234.

The inertia member 235 is inserted in respective lateral sides of the first and the second turbines 231 and 232 as shown in FIG. 3 to add an inertia to the driving forces of the first and the second turbine 231 and 232. For this, the inertial member 235 is a mass that has an annulus shape and rotates together with the first and the second turbines 231 and 232.

In order to be rotated together with the first and the second turbines 231 and 232, the inertia member 235 has a plurality of fixing holes 235a into which a plurality of fixing protrusions 237 formed on the respective lateral surfaces of the first and the second turbine 231 and 232 are inserted.

The outer surface of the inertia member 235 is covered and protected by a covering member 238. The covering member 238 has a plurality of another fixing holes 238a into which the fixing protrusion 237 of the first and the second turbines 231 and 232 are inserted.

The driving force transmitting unit 236 transmits the rotational forces of the first and the second turbines 231 and 232 to the cleaning member 220. For this, as shown in FIG. 2, the driving force transmitting unit 236 comprises a worm 236a connected to the rotary shaft 233 extended from the first and the second turbines 231 and 232 and a worm wheel 236b engaged with the worm 236a.

The worm 236a and the worm wheel 236b are connected to the first and the second cloth brushes 221 and 222 to drive the first and the second cloth brushes 221 and 222. It is preferable that the first and the second cloth brushes 221 and 222 differ from each other in a rotational direction. However, this should not be considered as limiting. Since a driving force transmitting principle achieved by the worm 236a and the worm wheel 236b is well-known in the related art, detailed descriptions are omitted.

In this embodiment, the driving force transmitting unit 236 comprises the worm 236a and the worm wheel 236b. In another embodiment, the driving force transmitting unit 236 may comprise a timing belt for transmitting the driving force.

With reference to FIGS. 1 to FIG. 5, operations of the turbine brush 200 of the vacuum cleaner 1 having the above construction will be described.

Referring to FIG. 1, when a user places the turbine brush 200 in contact with a cleaning surface and switches on the manipulation switch 31 of the connection pipe 30, a suction force is generated by a suction motor (not shown) disposed in the cleaner body 10. Air is drawn into the cleaner body by the suction force and drives the first and the second turbines 231 and 232.

The first and the second turbine 231 and 232 are rotated together with the inertia member 235. A rotational force is transmitted from the driving force transmitting unit 236 to the cleaning member 220. To this end, the cleaning member 220 is rotated and thus dirt is removed from the cleaning surface by the first and the second cloth brushes 221 and 222.

The dirt separated the cleaning member 220 is drawn into the dust-collecting chamber (not shown) of the cleaner body 10 through the suction path 212 and the connection pipe 30 by the suction force.

As described above, the suction path 212 has an opening of a predetermined width G2 which is formed due to the presence of the first and the second turbines 231 and 232 which are distanced away from each other. Therefore, the dirt particles can pass through the suction path 212 without big resistance or interference. Also, since the width of the first and the second turbines 231 and 232 becomes gradually narrowed, the first and the second turbines 231 and 232 are less subjected to an air resistance, which results in an attenuation of the rotational force. However, the shape of the blade 234 and the inertia member 235 compensate for the attenuation of the rotational force.

In the turbine brush 200 of the vacuum cleaner 1 according to the above-described construction, the first and the second turbines 231 and 232 do not impede the suction path 212 and also improves the rotational force.

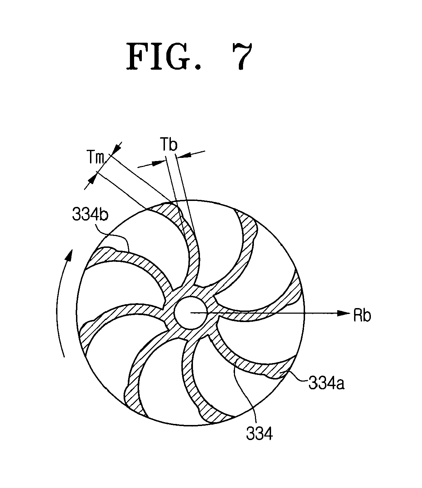

According to another embodiment of the present invention, a turbine brush of a vacuum cleaner comprises a turbine unit 330 as shown in FIGS. 6 and 7.

The turbine unit 330 comprises a first turbine 331 and a second turbine 332. Each of the first and the second turbine 331 and 332 has a plurality of blades 334. Each blade 334 is formed in a rotation radius direction Rb and has an uneven thickness. For this, one surface 334b of the blade 334, which is not subjected to a resistance of drawn-in air, is shaped in an uneven arc. More specifically, the surface 334b of the blade 334 is shaped in an uneven arc so the thickness Tm of the end 334a of the blade 334 is greater than the thickness Tb of the rest portion of the blade 334. Accordingly, a weight is added to the blade 334.

Each of the first and the second turbines 231 and 232 has a lateral surface of a predetermined thickness, which corresponds to the inertia member 235 of FIG. 2. The thickness of the lateral surface of each of the first and the second turbines 331 and 332 is equal to the thickness T2 added to the thickness T1 of the lateral surface of each of the first and the second turbine 231 and 232 as shown in FIG 4.

Due to the shape of the blade 334 and the thickness of the lateral surface of each of the first and second turbines 231 and 232, the rotational force becomes greater.

According to the present invention, when minute dirt particles such as hair is drawn in from a cleaning surface, the dirt does not interfere with the turbine unit 230 or 330 and thus, a rotational force becomes greater.

According to the present invention, since the turbine for driving the cleaning member does not interfere with the suction path, minute dirt particles or hair do not clog in the turbine. Therefore, the turbine is not likely to be damaged and a noise generation is prevented.

Also, a torque generated by a centrifugal force of the turbine unit can increase by varying the shape of the blade and the thickness of the inertia member or the lateral surface of the blade. This increase the rotational force of the turbine unit , and thus a cleaning efficiency of the turbine brush can be improved

The foregoing embodiments and advantages are merely exemplary and are not to be construed as limiting the present invention. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A turbine brush of a vacuum cleaner comprising:
a turbine brush body (210) having a suction path (212) formed therein for allowing air drawn in by a suction force generated in a cleaner body to pass therethrough;
a cleaning member (220) disposed on the turbine brush to face a cleaning surface, for removing dirt particles from the cleaning surface; and
a turbine unit (230 ; 330) rotatably disposed in the suction path to provide a driving force to drive the cleaning member, and having at least one blade (234, 334),
wherein the blade has a smaller width (D) than the suction path (212) with respect to a direction of a rotary shaft (233).

2. The turbine brush of the vacuum cleaner as claimed in claim 1, wherein the turbine unit (230, 330) comprises a plurality of turbines (231, 232 ; 331, 332) which are disposed along the rotary shaft (233) away from each other.

3. The turbine brush of the vacuum cleaner as claimed in claim 2, wherein the plurality of turbines (231, 232 ; 331, 332) are coupled to each other and rotated together with each other.

4. The turbine brush of the vacuum cleaner as claimed in claim 2, wherein the plurality of turbines (231, 232 ; 331, 332) are connected to each other such that the turbines are independently rotated.

5. The turbine brush of the vacuum cleaner as claimed in claim 2, wherein the plurality of turbines (231, 232 ; 331, 332) are symmetrical to each other.

6. The turbine brush of the vacuum cleaner as claimed in claim 2, wherein the plurality of turbines are provided as a pair of turbines (231, 232 ; 331, 332).

7. The turbine brush of the vacuum cleaner as claimed in claim 2, wherein the turbine unit (230 ; 330) comprises a plurality of blades (234, 334) each having the same width.

8. The turbine brush of the vacuum cleaner as claimed in claim 2, wherein the turbine comprises an inertia member (235) for applying an inertia to a driving force of the turbine unit, and an end (234a, 334a) of at least one blade (234, 334) is smaller than the last portion of the blade.

9. The turbine brush of the vacuum cleaner as claimed in claim 8, wherein the end (234a, 334a) of the blade (234, 334) is curved.

10. The turbine brush of the vacuum cleaner as claimed in claim 8, wherein the inertia member (235) is a mass that has an annulus shape and is supported by a side of the turbine unit (230) to rotate together with the turbine unit.

11. The turbine brush of the vacuum cleaner as claimed in claim 2, wherein the blade (334) has an uneven thickness in a rotation radius direction (Rb).

12. The turbine brush of the vacuum cleaner as claimed in claim 11, wherein the blade (334) has a surface (334b) which is not subjected to an air resistance, the surface having an uneven arc.

13. The turbine brush of the vacuum cleaner as claimed in claim 11, wherein an end (334a) of the blade (334) is thicker than the last portion of the blade.
